# EUROPEAN PATENT SPECIFICATION

(11) **EP 2 063 081 B1**
(45) Date of publication and mention of the grant of the patent: **03.08.2016**
(21) Application number: 07121505.7
(22) Date of filing: 26.11.2007
(51) Int. Cl.: F02B 23/06, F02F 3/00

(54) **Piston crown with double re-entrant piston bowl**
Kolbenboden mit einer doppelten Wiedereintrittskolbenmulde
Couronne de piston avec bol à double piston rentrant

(43) Date of publication of application: 27.05.2009
(73) Proprietor: Perkins Engines Company Limited, Peterborough, PE1 5NA (GB)
(72) Inventor: Parsi, Mohammad, Ealing, London W5 1JH (GB); English, William Robert, South Luffenham, Rutland LE15 8NG (GB); Addison, John R., Bourne PE10 0HH (GB); Mackay, Tom, Westhill, Iverness IV2 5DZ (GB)
(74) Representative: BRP Renaud & Partner mbB Rechtsanwälte Patentanwälte Steuerberater

(56) References cited:
- EP-A- 0 810 365
- EP-A- 0 911 500
- FR-A- 2 878 906
- JP-A- 2002 097 961
- US-B1- 6 997 158

## Description

### Technical Field

The present disclosure relates generally to a piston crown and, more particularly, to a piston crown having a double re-entrant piston bowl.

### Background

Engines, including diesel engines, gasoline engines, natural gas engines, and other engines known in the art, exhaust a complex mixture of air pollutants. The air pollutants are composed of gaseous compounds, which include nitrogen oxides, and solid particulate matter, that consist primarily of carbon called soot.

Due to increased attention on the environment, exhaust emission standards have become more stringent. The amount of air pollutants emitted from an engine may be regulated depending on the type of engine, size of engine, and/or class of engine. One method that has been implemented by engine manufacturers to comply with the regulation of particulate matter exhausted to the environment has been to develop new engines, which enhance swirl and air/fuel mixing while allowing for late fuel injections near top-dead-center (TDC).

One method for enhancing swirl is disclosed in European Patent No. 0 911 500 (the '500 patent), which describes a piston crown for use in an internal combustion engine. The piston crown has a face in which a piston bowl is recessed. This piston bowl is comprised of a cylindrical entrance space formed along an inner surface of the piston crown. A re-entrant portion is further recessed from the cylindrical entrance. A central raised portion is provided slightly raised upward from the bottom of the re-entrant portion. A restriction is formed below the cylindrical entrance space. At the end of a compression stroke a rimmed portion of the piston crown squishes or squeezes air trapped in a combustion chamber comprising the crown so as to produce the squish air flow entering the bowl. The bowl induces a swirl of air along an inner wall of the chamber. When the piston is moved down in a downward stroke, a counter squish flow will occur of gas and/or air flowing out of the bowl. The entrance space is provided with a sharp lip between the face and the wall of the entrance space, leading to a high flow resistance both for squish and counter squish flow along the lip. The piston bowl in the piston crown provides for a swirling flow of air and fuel in the re-entrant portion, forcing a mixture of air and fuel into the re-entrant portion and back out again, into the entrance space along the raised portion. The mixture flowing back into the direction of the entrance space will collide with air and fuel flowing into the entrance space in the direction of the reentrance portion. This will add to the swirling of the air/fuel mixture in the bowl. Above the raised portion a dead space will be present near a central crown axis, where less flow will occur, which may lead to deposit of soot. Especially at a downward stroke of the piston such soot will be sucked out of the bowl due to reduced pressure above the entrance space during the counter squish flow.

Although this piston bowl may promote mixing of air and fuel spray through counter-squish action in an expansion stroke, the resulting swirl may still be limited. Soot deposition may occur in the piston bowl, especially near the lip forming the connection between the entrance space and the face and at the connection between the entrance space and the reentrance portion. Furthermore soot deposition may occur, especially at parts of the raised portion. These depositions may lead to undesired and unallowable solid particle matter in the exhaust fumes. Moreover the design of this known piston crown and especially the piston bowl may be sensitive to mechanical and thermal wear. The sharp lip can be prone to wear by air and fuel flowing past the edge, which will lead to damage to the lip, deposits of fine metal particles from the lip in the bowl and to soot deposits. It will also reduce the life span of the crown. Furthermore wetting of the wall of the entrance space and of the raised portion may be relatively high, which may lead to further soot deposits.

European Patent 0 810 365 A1 discloses a diesel engine with direct fuel injection comprising a combustion cavity having a constriction near the entry side extending into a lower outer wall via a transition with a strongly rounded section. An inner wall defining a central raised portion is concave up to a tear-off edge, which is located approximately at half the depth of the combustion cavity. When seen in radial cross section, the shortest distance between outer and inner walls decreases continuously from the tear-off edge to the lowest point of the cavity.

The disclosed piston crown is directed at addressing at least one of the problems set out above

### Summary of the Invention

In one aspect the present disclosure is directed to a piston crown comprising a face and a piston bowl recessed in said face, which bowl has an entry side and a bottom side. A restriction is formed between the entry side and the bottom side. A re-entrant portion is provided at the bottom side. An annular side surface extends between the face and the restriction, at least partly defining a space widening in the direction of the bottom side.

In another aspect, the present disclosure is directed to a method for mixing fuel and air in a piston bowl. The method includes drawing air and fuel into the bowl and expanding the air and fuel in radially outward direction within the bowl and then forcing the expanded air and fuel through a restriction, to compress the air and fuel. The method further includes expanding the air and fuel a second time. The method also includes inserting the air and fuel by a swirling action and redirecting the mixture to intersect with the radially expanding gas and fuel.

In another aspect, the present disclosure is directed to a combustion engine comprising at least one cylinder and a cylinder head associated therewith to form at least one combustion chamber. A fuel injector device is provided in said cylinder head for spraying fuel into the combustion chamber. A piston is disposed in said at least one cylinder to receive the sprayed fuel. The piston has a face and a piston bowl recessed in the face, which piston bowl has an entry side, an opposite bottom side and a raised portion at the bottom side. A restriction is provided between the entry side and the bottom side. A re-entrant portion is provided at the side of the restriction facing the entry side. An annular side surface extends between the entry side and the restriction, which side surface defines at least partly a space widening in the direction of the restriction.

### Brief Description of the Drawings

Fig. 1 is a diagrammatic and schematic illustration of an exemplary disclosed internal combustion engine;
Fig. 2 is a top plan view of an exemplary embodiment of a piston crown that can be used in an engine according to Fig. 1;
Fig. 3 is a cross sectional side view of a piston crown along the line A - A in Fig. 2; and
Fig. 4 is an enlarged view of the piston crown of Fig. 3.

### Detailed Description

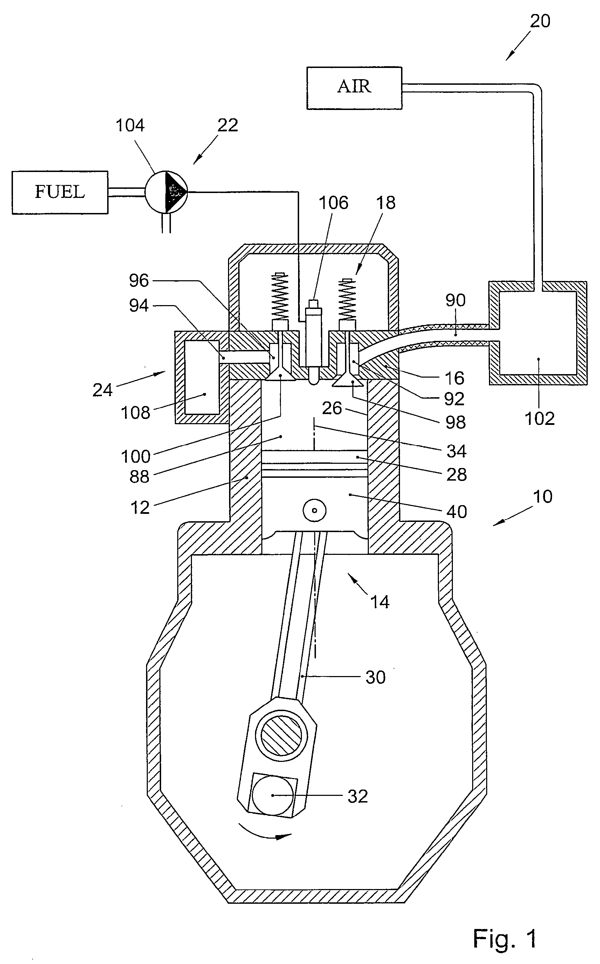

An exemplary internal combustion engine 10 is illustrated in Fig. 1. Internal combustion engine 10 is depicted and described as a diesel engine. However, it is contemplated that internal combustion engine 10 may be any other type of internal combustion engine, such as, for example, a gasoline, natural gas, kerosene of bio fuel engine. Internal combustion engine 10 may include an engine block 12 with a plurality of piston assemblies 14 (only one shown) and a cylinder head 16 associated with each piston assembly 14. A valve actuation system 18, an air induction system 20, a fuel system 22, and an exhaust system 24 may be provided for the engine 10.

Engine block 12 may be a central structural member defining a plurality of cylinders 26 (only one shown). One of piston assemblies 14 may be slidably disposed within each of cylinders 26. It is contemplated that the internal combustion engine 10 may include any number of cylinders 26 and that the cylinders 26 may be disposed in an "in-line" configuration, a "V" configuration, or any other conventional configuration.

Each piston assembly 14 may be configured to reciprocate between a bottom-dead-center (BDC) position, or lower-most position within cylinder 26, and a top-dead-center (TDC) position, or upper-most position within cylinder 26. In particular, piston assembly 14 may include a piston crown 28 and a skirt 40, pivotally connected to a connecting rod 30, which is in turn pivotally connected to a crankshaft 32. The piston crown 28 and the skirt 40 may be made integrally or can be made as separate parts and then connected to each other. Crankshaft 32 of internal combustion engine 10 may be rotatably disposed within engine block 12 and each piston assembly 14 coupled to crankshaft 32 so that a sliding motion of each piston assembly 14 within each cylinder 26 results in a rotation of crankshaft 32. Similarly, a rotation of the crankshaft 32 may result in a sliding motion of piston assemblies 14. As crankshaft 32 rotates 180 degrees, piston crown 28 and linked connecting rod 30 move through one full stroke between BDC and TDC. Internal combustion engine 10 may be a four stroke engine, wherein a complete cycle includes an intake stroke (TDC to BDC), a compression stroke (BDC to TDC), a power stroke (TDC to BDC), and an exhaust stroke (BDC to TDC). It is also contemplated that internal combustion engine 10 may alternately be a two stroke engine, wherein a complete cycle includes a compression/exhaust stroke (BDC to TDC) and a power/exhaust/intake stroke (TDC to BDC).

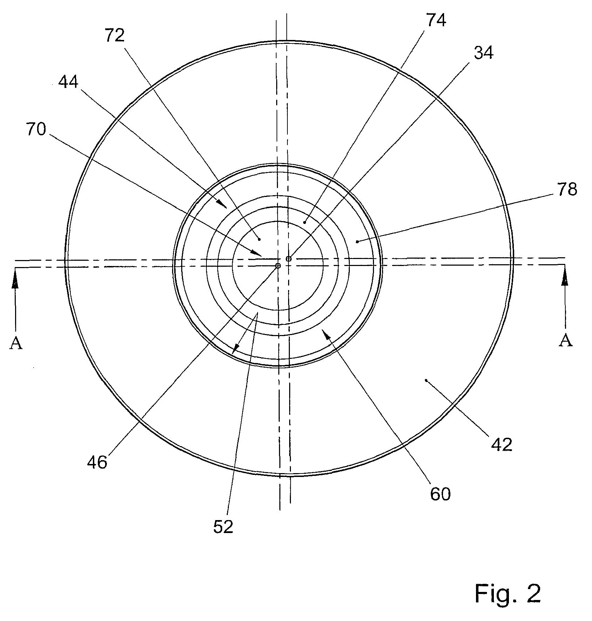

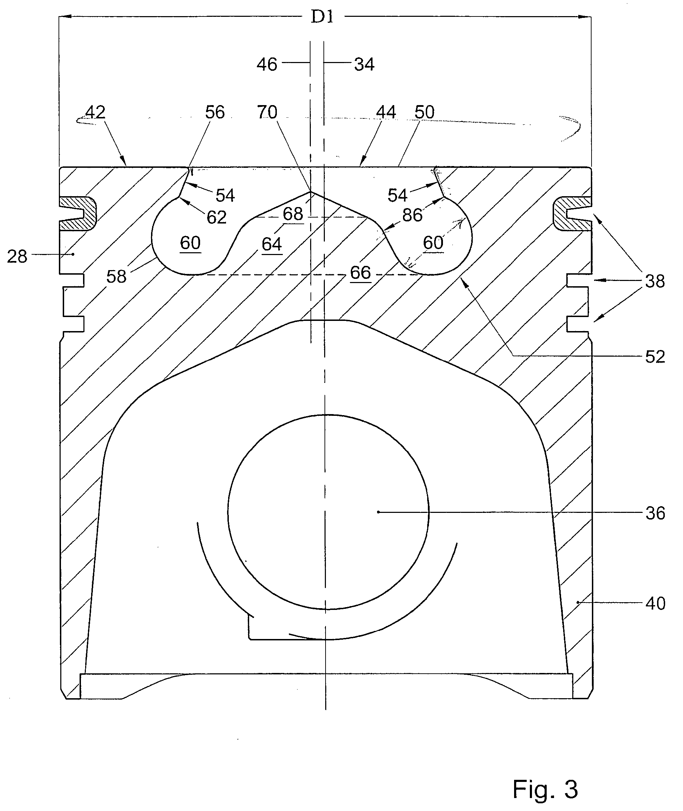

As illustrated in Figs. 2 and 3, piston crown 28 may have a generally cylindrical structure with a central crown axis 34, and may include a pivot bearing support 36, one or more ring grooves 38, and a face 42. Pivot bearing support 36 may be generally tubular, disposed transversely relative to longitudinal axis 34, and configured to receive a bearing (not shown) for rotatably supporting a wrist pin (not shown) that connects piston crown 28 to connecting rod 30. Ring grooves 38 may include annular grooves cut into an outer curved surface of piston crown 28 and may be configured to receive oil rings, compression rings, or any other type of piston rings known in the art. Face 42 may be a curved or planar piston surface against which the combustion gases exert pressure. The face 42 may provide access to a piston bowl 44 recessed within the face 42.

The piston bowl 44 can have a substantially annular shape, rotational symmetric around a bowl axis 46, which bowl axis 46 can be offset relative to the central crown axis 34 of the piston crown 28, for example in a first direction, perpendicular to the bowl axis 46 by about 1.6 to 1.8 mm and in a second direction, perpendicular to the first direction and to the bowl axis 46 by about 2.5 to 2.7 mm. The piston crown axis 34 may be the same as the cylinder axis and can be generally parallel to the bowl axis 46. The piston bowl 44 can be formed by any applicable forming technique, such as but not limited to forging, casting, turning, milling, drilling or combinations thereof. The piston bowl 44 may have an entry side 50 at the face 42 and a bottom side 52 opposite the entry side 50.

As is shown in Fig. 3, the piston bowl 44 can have an annular side surface 54 connected to the face 42 by a lip 56. The lip 56 can be rounded. In one embodiment the lip 56 may have a radius R₁ of between about 0 and 2 mm. In a second embodiment the lip may have a radius R₁ of between about 0.2 and 1 mm. In a further embodiment the radius R₁ of the lip 56 can be about 0.5 mm. The annular side surface 54 may be connected to a bottom surface 58 of a re-entrant portion 60 of the bowl through an edge 62. The re-entrant portion 60 can have a shape resembling a thyroid shape, having a non-circular cross section. The edge 62 can be rounded. In an embodiment the edge 62 can have a radius R₂ that can be between about 0 and 2 mm. In a second embodiment the edge 62 can have a radius R₂ between 0.2 and 1 mm. In a further embodiment the radius R₂ can be about 0.5 mm. At the bottom side 52 a raised portion 64 can be provided. The bottom surface 58 can extend from the edge 62 as a continuous, three dimensionally curved surface towards the raised portion 64.

The raised portion 64 may comprise a base 66 and a top 68. The base 66 can be substantially frusto-conical in shape, with a decreasing diameter in the direction of the entry side 50. The top 68 can be substantially conical in shape having a diameter decreasing in the direction of the entry side 50. A tip 70 of the raised portion 64 can be smooth, for example rounded or angled, or can be relatively sharp angled. A surface 72 of the top 68 can be connected to a surface 74 of the base 66 by a radius R₃. The radius R₃ can be chosen such that a smooth intermediate surface is provided for guiding air and fuel. In an embodiment the radius R₃ can for example be between about 5 and 10 mm. In a further embodiment the radius R₃ may be about 7.5 mm. The surfaces 72, 74 may form a smooth, continuous surface of the raised portion 64, which can be connected to the bottom surface 58 by a radius R₄, which in one embodiment can be between about 3 and 10 mm. In a further embodiment the radius R₄ may be about 6.5 mm. A tangent T₁ of the base 66 can include an angle α with the axis 46 which can be for example between about 0 and 30 degrees. A tangent T₂ of the top 68 can include an angle β with the axis 46 which can for example be between about 45 and 75 degrees. In an embodiment the angle α can be about 27.5 degrees and the angle β can be about 65 degrees.

The bottom surface 58 can comprise a first curved section 76 connected to the edge 62, which in an embodiment can have a radius R₅ which can for example be between about 6 and 10 mm. In an embodiment the radius R₅ can be between 7 and 9 mm. In a further embodiment the radius R₅ may be about 8.9 mm. A second curved section 78 can be connected to the first curved section 76, which in an embodiment can have a radius R₆ that can be between about 3 and 9 mm. In another embodiment the radius R₆ can be between 4 and 8 mm. In a further embodiment the radius R₅ can be about 6.7 mm. The second section 78 can be connected directly to the surface 74 of the base 66. Alternatively a substantially flat or less curved section 80 can be provided between the surface 74 and the second section 78.

A tangent T₃ of the annular side surface 54 may include an angle γ with the axis 46. In an embodiment the angle γ can for example be between about 10 and 40 degrees. In a further embodiment the angle γ can be between about 20 and 35 degrees. In another embodiment the angle γ may be about 19.2 degrees. The annular side surface 54 may slant outward in the direction of the bottom side 52, at least partly defining a space 82 that may be widening towards the bottom side 52. The side surface 54 may be flat or curved between the lip 56 and the edge 62. In an embodiment the annular side surface 54 may be substantially flat between the lower side of the lip 56 and the upper side of the edge 62. The space 82 can further be such that it can be defined by at least a first imaginary plane P₁ extending substantially perpendicular to the longitudinal axis 46 the lip 56, facing the bottom side 52, and a second imaginary plane P₂ extending substantially parallel to the first plane P₁ at the edge 62. The raised portion 64 may extend into the space 82, at least with the tip 70 and part of the surface 72. This may mean that the raised portion 64 intersects with at least the second imaginary plane P₂. The space 82 and especially a dead space around the axis 34 in the bowl may thereby be reduced. The tip 70 can extend from the bottom surface over a height H₁, such that the tip 70 is a distance H₂ below the face 42, measured along the axis 46. The distance H₂ can for example be between about 4 and 15 mm. In an embodiment the distance H₂ can be between about 4 and 12 mm. In another embodiment the distance H₁ may be about 5 mm. The second imaginary plane P₂ can be positioned below the face 42 over a distance H₃, which may be larger than H₂. The distance H₃ can for example be between 2 and 15 mm. In an embodiment the distance H₃ may be between about 6 and 7 mm.

The crown 28 can have a diameter D₁ larger than the diameter of the entry side 50 within the lip 56. In an embodiment the diameter D₁ can be between for example about 90 and 150 mm. In another embodiment the diameter D₁ may be between about 100 and 140 mm, for example 105 mm. The bowl 44 may have at the entry side 50 a diameter D₂ which may be for example between about 40 and 60 mm. In an embodiment the diameter D₂ can be between about 45 and 55. In a further embodiment the diameter D₂ may be about 49.4 mm. The re-entrant portion 62 may have a maximum diameter D₃, which in one embodiment may be between about 55 and 70 mm. In another embodiment the diameter D₃ may be between about 60 and 67 mm. In a further embodiment the diameter D₃ may be about 63.3 mm. In an embodiment the distance H₄ between the face 42 and the bottom side 52 may be between about 18 and 24 mm. In another embodiment the distance H₄ may be between about 19 and 23 mm. In a further embodiment the distance H₄ may be about 21.9 mm. In an embodiment a centerline 48 of the re-entrant portion 62 may be a distance H₅ of between about 11 and 16 mm below the face 42. In another embodiment the distance H₅ may be between about 12 and 15 mm. In a further embodiment the distance H₅ may be about 14.4 mm. In an embodiment the bowl 44 may have a volume V of between about 40 and 60 cubic centimeters (cc). In another embodiment the volume V may be between about 42 and 52 cc. In a further embodiment the bowl 44 may have a volume V of about 47 cc.

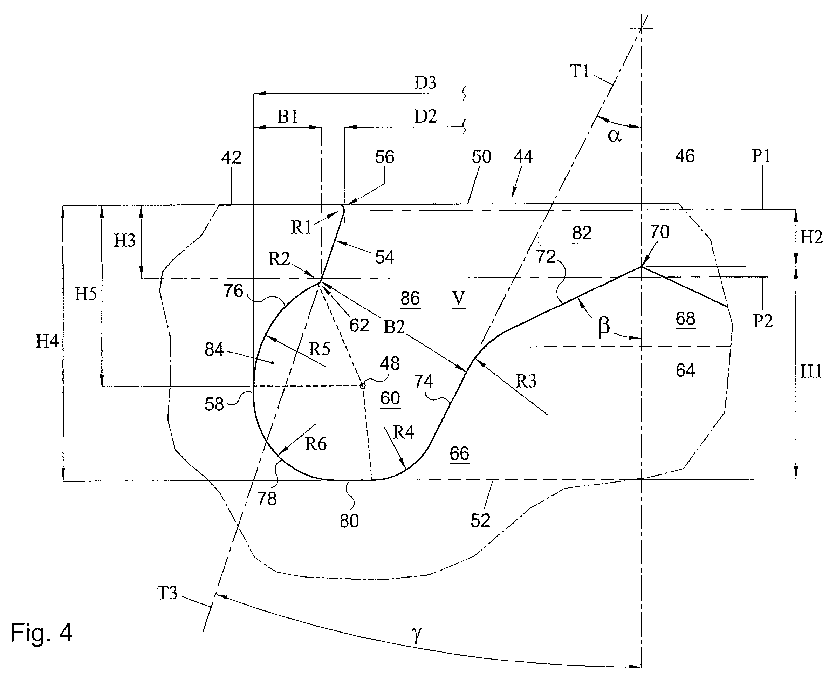

As is shown in Fig. 4, between a tangent T₃ to the annular side surface 54 and the bottom surface 58 of the re-entrant portion 62 an undercut area 84 may be enclosed. The maximum depth B₁ of the undercut area 84 measured substantially perpendicular to the axis 34, may be between about 1 and 5 mm. In an embodiment the depth B₁ may be between about 2 and 4 mm. In a further embodiment the depth B₁ may be about 4 mm.

In an embodiment between the lip 56 and the raised portion 62 a restriction such as a restricting area 86 may be provided. In a further embodiment between the edge 62 and the raised portion 64 a restriction such as a restricting area 86 may be provided. In another embodiment between the edge 62 and the top 68 a restriction 86 may be formed. The minimal width B₂ of the restriction 86 can be between about 10 and 18 mm. The width B₂ can in one embodiment be measured between the edge 62 and the raised portion 64. The restriction 86 can in one embodiment have a substantially truncated conical shape.

In an embodiment a piston crown 28 can be used having a larger or smaller diameter D₁ than discussed before. The piston bowl 44 can then be identical in shape and dimensions as discussed before or can be scaled up or down, corresponding to the scale difference.

Each cylinder head 16 may be associated with one cylinder 26 to form a combustion chamber 88 having one or more ports. Specifically, cylinder head 16 may define an intake passageway 90 that leads to an intake port 64 for each cylinder 26. Cylinder head 16 may further define at least one exhaust passageway 94 that leads to an exhaust port 96 for each cylinder 26. It is contemplated that one cylinder head 16 may alternately be associated with multiple cylinders 26 and piston assemblies 14 to form multiple combustion chambers. It is also contemplated that cylinder head 16 may further define two or more intake ports 92 and/or exhaust ports 96 for each cylinder 26.

Valve actuation system 18 may include an intake valve 98 disposed within each intake port 92. Each intake valve 98 may include a valve element that is configured to selectively block the respective intake port 92. Each intake valve 98 may be actuated to move or "lift" the valve element to thereby open the respective intake port 92. In a cylinder 26 having a pair of intake ports 64 and a pair of intake valves 98, the pair of intake valves 98 may be actuated by a single valve actuator (not shown) or by a pair of valve actuators (not shown).

An exhaust valve 100 may be disposed within each exhaust port 96. Each exhaust valve 100 may include a valve element that is configured to selectively block the respective exhaust port 96. Each exhaust valve 100 may be actuated to move the valve element to thereby open the respective exhaust port 96. In a cylinder 26 having a pair of exhaust ports 96 and a pair of exhaust valves 100, the pair of exhaust valves 100 may be actuated by a single valve actuator (not shown) or by a pair of valve actuators (not shown).

Air induction system 20 may be configured to draw air into internal combustion engine 10 and may include an intake manifold 102 fluidly connected with intake passageway 90. It is contemplated that air induction system 20 may be a charged air system having a turbine-driven or engine-driven compressor (not shown), or may include additional air handling components such as, for example, a waste gate, a throttle valve, an EGR system, an air cleaner, an air cooler, or any other air handling component known in the art.

Fuel system 22 may be configured to supply fuel to internal combustion engine 10 and may include a source of pressurized fuel 104 and at least one fuel injector 106. It is contemplated that additional components may be included such as for example, a valve, a common fuel rail configured to distribute fuel to multiple fuel injectors, a pre-combustion chamber, or any other fuel system component known in the art.

Source of pressurized fuel 104 may be configured to produce a flow of pressurized fluid and may include a pump such as, for example, a variable displacement pump, a fixed displacement pump, a variable flow pump, or any other source of pressurized fluid known in the art. Source of pressurized fuel 104 may be drivably connected to the power source (not shown) by, for example, a countershaft (not shown), a belt (not shown), an electrical circuit (not shown), or in any other suitable manner. It is also contemplated that source of pressurized fuel 104 may alternately be a supply of pressurized gaseous fuel.

Each of fuel injectors 106 may be disposed within cylinder head 16 associated with each cylinder 26. Each fuel injector 106 may be operable to inject an amount of pressurized fuel into combustion chamber 88 at predetermined fuel pressures and fuel flow rates. Each fuel injector 106 may be mechanically, electrically, pneumatically, or hydraulically operated.

Exhaust system 24 may be configured to direct exhaust from cylinder 26 to the atmosphere and may include an exhaust manifold 108 in fluid communication with exhaust passageway 94 associated with each cylinder 26. It is contemplated that exhaust system 24 may include other components such as, for example, a turbine, an exhaust gas recirculation system, a particulate filter, a catalytic aftertreatment system, or any other exhaust system component known in the art.

### Industrial Applicability

The disclosed piston crown 28 may be applicable to any internal combustion engine where swirling and mixing of injected fuel is important. By applying a piston crown according to the disclosure the swirling effect of air and fuel and therefore the mixing thereof will be enhanced. This can lead to improved combustion. A piston crown according to the disclosure can also have the effect that it is resistant to wear and to soot deposition. A combustion engine provided with one or more piston crowns 28 according to the disclosure may have improved quality of exhaust gas, and may be suitable as for example tier three emissions compliant type engine. The operation of internal combustion engine 10 will now be explained.

During an intake stroke of internal combustion engine 10, as piston assembly 14 is moving within cylinder 26 between the TDC position and the BDC position, intake valve 98 may be in the open position, as shown in Fig. 1. During the intake stroke, the downward movement of piston assembly 14 toward the BDC position may create a low pressure within cylinder 26. The low pressure may act to draw air from intake passageway 90 into cylinder 26 via intake port 92. A turbocharger may alternatively be used to force compressed air into cylinder 26.

Following the intake stroke, both intake valve 98 and exhaust valve 100 may be in a closed position where the air is blocked from exiting cylinder 26 during the upward compression stroke of piston assembly 14. As piston assembly 14 moves upward from the BDC position toward the TDC position during the compression stroke, fuel may be injected into cylinder 26 for mixing and compression with air within cylinder 26. It is contemplated that the fuel may be injected into cylinder 26 at any time during the compression stroke, during a portion of the intake stroke when operating as a Homogeneous Charge Compression Ignition engine, or at multiple times during both the intake and compression strokes when operating as a Mixed Mode Injection engine. In one example, piston crown 28 may be effectively implemented to improve swirling and mixing during engine operation where the fuel is injected during the compression stroke, when crankshaft 32 is rotated to an angle of for example between 120 degrees and 40 degrees before TDC. In another embodiment the range could be between 30° before TDC and 10° after TDC. In the same or another embodiment the piston crown 28 may be effectively implemented to improve air and/or gas movement during a downward stroke of the piston. In particular during an expansion stroke when reversed squish flows are generated.

Fuel sprayed into the combustion chamber 88 may be directed at least partly into the entry side 50 of the bowl 44. Moreover air may be directed into the bowl 44. In one embodiment a relatively sharp lip 56 may lead to high shear flows which may be generated at the lip 56 and may locally break down a main flow of fuel and air into the bowl 44 into small scale turbulent flow. This can be beneficial to increased local air/fuel mixing. By having a radius R₁ of the lip 56 of between about 0.2 and 1 mm the shear flow generated at the lip 56 may be highly turbulent, whereas the lip 56 can still be thermally and mechanically stable and resistant to breakage and wear by the air and fuel flow and resulting combustion temperatures. A smaller radius R₁ of the lip 56 may be favorable for the turbulent shear flow but may reduce the mechanical and thermal stability of the lip 56. Damage to the lip 56 may negatively influence the flow pattern inside the bowl 44 and the combustion chamber 88 and may lead to soot deposits. Soot and other deposits within the bowl 44 may negatively influence the quality of the exhaust gas from the combustion.

In the space 82 the fuel and air can expand radially due to the increasing diameter of the annular side surface 54 in the direction of the bottom side 52. This expansion may increase mixing of the fuel and air. The space 82 can act as a throat, sucking air and/or fuel into the bowl 44 due to pressure differences within the bowl 44 and between the bowl 44 and the combustion chamber 88. When the tip 70 extends into the space 82 dead space around the axis 46 near the entry side 50 of the bowl may be filled, which may prevent or reduce soot deposit at the tip 70. From the space 82 the fuel and air, at least partly mixed into a mixture, may be forced further into the direction of the bottom side 52 and may be forced at least partly into and through the restriction 86, thereby becoming compressed. When the mixture has passed the restriction 86 it can expand again, at least partly radially outward, especially into the undercut area 84. Part of the mixture of air and fuel may be guided upward by the bottom surface 58, and may be guided back into the direction of the entry side 50. Part of the mixture may also be guided by the surface 74 of at least the base 66 of the raised portion 64.

The redirected mixture may be forced back through the restriction 86 and into the space 82, where it may intersect with gas and air flowing into the bowl 44, towards the restriction 86. Part of the redirected mixture may mix with the incoming fuel and air and can be taken back through the restriction 86 into the re-entrant portion 60. This flow pattern may enhance swirling action within the bowl significantly and, therefore, improve the mixing of air and fuel.

The space 82 widening into the direction of the bottom surface 58 can have a further benefit, in that droplets of fuel can penetrate further into the bowl 44, due to for example the expansion of the fuel and air in the space 82. Moreover, fuel vapor concentrations may be reduced in the bowl 44. Furthermore, wetting of the wall of the bowl 44, especially of the annular side surface 54 and the surfaces 72, 74 of the raised portion 64 can be reduced. All of these effects can add to the benefit of improved air/fuel mixing.

The angle α of the surface 72 of the base 66 can have the advantage that the direction of air and fuel into and out off the re-entrant portion 60 may be improved. By increasing the angle α, the direction of the re-entrant flow of air and fuel can be more towards the tip 70. It can thereby improve the air flow distribution within the combustion chamber 88, in particular during expansion strokes when reversed squish flows are generated.

After the end of insertion of air and/or gas and/or after the end of the air and gas mixing a turbulent gasflow can be obtained in a bowl according to the description, which may promote oxidation of residual soot from the combustion. This may (further) reduce overall levels of soot exhausted to the atmosphere from the engine.

Although the preferred embodiments of this invention have been described herein, improvements and modifications may be incorporated without departing from the scope of the following claims.

## Claims

1. A piston crown comprising:
a face (42); and
a piston bowl (44) recessed within the face (42) and having:
an entry side (50);
a bottom side (52) opposite the entry side (50);
a restriction (86) between the entry side (50) and the bottom side (52);
a re-entrant portion (60) at the bottom side (52); and
an annular side surface (54) extending between the entry side (50) and the restriction (86),
**characterized in that**
the annular side surface (54) at least partly defines a space (82) widening in the direction of the restriction (86).

2. The piston crown according to claim 1, wherein a raised portion (64) is provided at the bottom side (52).

3. The piston crown according to claim 1, wherein the annular side surface (54) is connected to a bottom wall (58) of the re-entrant portion (60) by an at least partly rounded edge (62) having a radius (R2) between about 0 and 2 mm, preferably between about 0.01 and 1 mm and more preferably about 0.5 mm.

4. The piston crown according to any one of claims 1 - 3,
wherein the bowl (44) includes a lip (56) at the face (42), the lip (56) being rounded and having a radius (R1) between about 0 and 2 mm, preferably between about 0.2 and 1 mm and more preferably about 0.5 mm.

5. The piston crown according to any one of claims 1 - 4,
wherein the space at least partly defined by the annular side surface (54) forms a throat (82).

6. The piston crown according to claim 2, wherein the raised portion (64) extends into the space (82) defined at least partly by the annular side surface (54).

7. The piston crown according to claim 6, wherein the raised portion (64) extends to between about 4 and 15 mm below the face (42), preferably between about 4 and 12 mm and more preferably about 5 mm.

8. The piston crown according to any one of claims 1 - 6, comprising a raised portion (64) at the bottom side (52), wherein the raised portion (64) includes a base (66) having a substantially frusto-conical shape and a top (68) having a substantially conical shape, an outer surface (72) of the top (68) being connected to an outer surface (74) of the base (66) by a radius (R3) of between about 5 and 10 mm, preferably about 7.5 mm.

9. The piston crown according to claim 8, wherein in a tangent (T1) of the base (66) forms an angle (α) between about 0 and 30 degrees with a longitudinal axis (46) of the top (68), and a tangent (T2) of the top (68) forms an angle (β) of between about 45 and 75 degrees with the longitudinal axis (46).

10. The piston crown according to any one of claims 1 - 8,
wherein the piston crown (28) has a bowl axis (46) and the bowl (44) is rotationally symmetric around a bowl axis (46), which is offset from the central axis (34), preferably parallel to the central axis (34).

11. The piston crown according to any one of claims 1 - 10,
wherein a tangent (T3) of the annular side surface (54) forms an angle (γ) of between about 10 and 40 degrees, preferably between about 20 and 35 and more preferably about 19.2 degrees with a central crown axis (46).

12. A piston comprising a piston crown (28) according to any one of claims 1- 11.

13. A method for mixing fuel and air, comprising:
directing air and fuel to enter into a bowl (44) and expand radially outward;
restricting the air and fuel after it has entered the bowl (44) and expanded radially;
mixing the air and fuel within the bowl (44) forming a mixture;
redirecting at least part of the mixture to intersect with the air and fuel expanding radially outward, and
expanding the air and fuel radially outward a second time.

14. The method according to claim 13, further including:
redirecting part of the mixture towards an area of restriction (86)
intersecting the redirected part of the mixture with air and/or fuel at an entry side (50) of the bowl (44); and
reentering part of the mixture back through the area of restriction (86).

15. A combustion engine comprising:
at least one cylinder (26);
a cylinder head (16) associated with the at least one cylinder (26) to form a combustion chamber (88);
a fuel injector device (106) provided in the cylinder head (16) to spray fuel into the combustion chamber (88); and
a piston disposed in the at least one cylinder (26) to receive the sprayed fuel, the piston having:
a face (42);
a piston bowl (44) recessed in the face (42), the piston bowl (44) having:
an entry side (50);
a bottom side (52) opposite the entry side (50);
a restriction (86) between the entry side (50) and the bottom side (52);
a re-entrant portion (60) at the side of the restriction (86) facing the bottom side (52); and
an annular side surface (54) extending between the entry side (50) and the restriction (86),
**characterized in that**
the annular side surface (54) at least partly defines a space (82) widening in the direction of the restriction (86).

16. The combustion engine of claim 15, wherein the piston bowl (44) further includes a raised portion (64) at the bottom side (52).

17. The combustion engine of claim 16, wherein the re-entrant portion (60) includes an undercut area (84) positioned between a tangent (T3) to the annular side surface (54) and a wall (58) of the re-entrant portion (60).

18. The combustion engine according to claim 17, wherein the tangent (T3) to the annular side surface (54) and the wall (58) of the re-entrant portion (60) intersect at an edge (62) which has a radius (R2) of between about 0 and 2 mm, preferably between about 0.01 and 1 mm and more preferably about 0.5 mm.

19. The engine according to any one of claims 15 - 18, wherein the face (42) has a lip (56) with a radius (R1) between about 0 and 2 mm, preferably between about 0.2 and 1 mm, more preferably about 0.5 mm.

20. The engine according to any one of claims 15 - 20, wherein the raised portion (64) extends into the space (82) at least partly defined by the annular side wall (54).

## Patentansprüche

1. Kolbenboden, umfassend:
eine Fläche (42); und
eine Kolbenmulde (44), die in der Fläche (42) versenkt ist und Folgendes aufweist:
eine Eingangsseite (50);
eine Unterseite (52) gegenüber der Eingangsseite (50);
eine Drosselung (86) zwischen der Eingangsseite (50) und der Unterseite (52);
einen einspringenden Abschnitt (60) an der Unterseite (52); und
eine ringförmige Seitenoberfläche (54), die sich zwischen der Eingangsseite (50) und der Drosselung (86) erstreckt, **dadurch gekennzeichnet, dass**
die ringförmige Seitenoberfläche (54) mindestens teilweise einen Raum (82) definiert, der sich in der Richtung der Drosselung (86) aufweitet.

2. Kolbenboden nach Anspruch 1, wobei ein erhöhter Abschnitt (64) an der Unterseite (52) bereitgestellt ist.

3. Kolbenboden nach Anspruch 1, wobei die ringförmige Seitenoberfläche (54) mit einer unteren Wand (58) des einspringenden Abschnitts (60) durch eine mindestens teilweise abgerundete Kante (62) verbunden ist, die einen Radius (R2) zwischen etwa 0 und 2 mm, vorzugsweise zwischen etwa 0,01 und 1 mm und mehr bevorzugt etwa 0,5 mm aufweist.

4. Kolbenboden nach einem oder mehreren der Ansprüche 1 bis 3, wobei die Mulde (44) eine Lippe (56) an der Fläche (42) aufweist, wobei die Lippe (56) abgerundet ist und einen Radius (R1) zwischen etwa 0 und 2 mm, vorzugsweise zwischen etwa 0,2 und 1 mm und mehr bevorzugt etwa 0,5 mm aufweist.

5. Kolbenboden nach einem der Ansprüche 1 bis 4, wobei der Raum, der mindestens teilweise durch die ringförmige Seitenoberfläche (54) definiert ist, einen Hals (82) bildet.

6. Kolbenboden nach Anspruch 2, wobei sich der erhöhte Abschnitt (64) in den Raum (82) erstreckt, der mindestens teilweise durch die ringförmige Seitenoberfläche (54) definiert ist.

7. Kolbenboden nach Anspruch 6, wobei sich der erhöhte Abschnitt (64) zwischen etwa 4 und 15 mm unter der Fläche (42), vorzugsweise zwischen etwa 4 und 12 mm und mehr bevorzugt etwa 5 mm erstreckt.

8. Kolbenboden nach einem der Ansprüche 1 bis 6, umfassend einen erhöhten Abschnitt (64) an der Unterseite (52), wobei der erhöhte Abschnitt (64) eine Basis (66) mit einer im Wesentlichen kegelstumpförmigen Form und eine Oberseite (68) mit einer im Wesentlichen kegelförmigen Form aufweist, wobei eine äußere Oberfläche (72) der Oberseite (68) mit einer äußeren Oberfläche (74) der Basis (66) durch einen Radius (R3) zwischen etwa 5 und 10 mm, vorzugsweise etwa 7,5 mm verbunden ist.

9. Kolbenboden nach Anspruch 8, wobei eine Tangente (T1) der Basis (66) einen Winkel (α) zwischen etwa 0 und 30 Grad mit einer Längsachse (46) der Oberseite (68) bildet und eine Tangente (T2) der Oberseite (68) einen Winkel (β) zwischen etwa 45 und 75 Grad mit der Längsachse (46) bildet.

10. Kolbenboden nach einem der Ansprüche 1 bis 8, wobei der Kolbenboden (28) eine Muldenachse (46) aufweist und die Mulde (44) um eine Muldenachse (46) drehsymmetrisch ist, die von der Mittelachse (34), vorzugsweise parallel zu der Mittelachse (34) versetzt ist.

11. Kolbenboden nach einem der Ansprüche 1 bis 10, wobei eine Tangente (T3) der ringförmigen Seitenoberfläche (54) einen Winkel (γ) zwischen etwa 10 und 40 Grad, vorzugsweise zwischen etwa 20 und 35 und mehr bevorzugt von etwa 19,2 Grad mit einer zentralen Bodenachse (46) bildet.

12. Kolben, umfassend eine Kolbenboden (28) nach einem der Ansprüche 1 bis 11.

13. Verfahren zum Mischen von Kraftstoff und Luft, umfassend:
Lenken von Luft und Kraftstoff, sodass diese in eine Mulde (44) eintreten und sich radial nach außen expandieren;
Drosseln der Luft und des Kraftstoffs, nachdem diese in die Mulde (44) eingetreten sind und sich radial expandiert haben;
Mischen der Luft und des Kraftstoffs in der Mulde (44), um eine Mischung zu bilden;
Umlenken mindestens eines Teils der Mischung, sodass sich dieser mit der Luft und dem Kraftstoff schneidet, die sich radial nach außen expandieren, und
Expandieren der Luft und des Kraftstoffs radial nach außen zum zweiten Mal.

14. Verfahren nach Anspruch 13, ferner aufweisend:
Umlenken eines Teils der Mischung zu einem Drosselbereich (86);
Schneiden des umgelenkten Teils der Mischung mit Luft und/oder Kraftstoff an einer Eingangsseite (50) der Mulde (44); und
erneutes Einleiten eines Teils der Mischung zurück durch den Drosselbereich (86).

15. Verbrennungsmotor, umfassend:
mindestens einem Zylinder (26);
einen Zylinderkopf (16), der dem mindestens einen Zylinder (26) zugeordnet ist, um eine Verbrennungskammer (88) zu bilden;
eine Kraftstoffeinspritzvorrichtung (106), die in dem Zylinderkopf (16) bereitgestellt ist, um Kraftstoff in die Verbrennungskammer (88) zu sprühen, und
einen Kolben, der in dem mindestens einen Zylinder (26) angeordnet ist, um den gesprühten Kraftstoff aufzunehmen, wobei der Kolben Folgendes aufweist:
eine Fläche (42);
eine Kolbenmulde (44), die in der Fläche (42) versenkt ist, wobei die Kolbenmulde (44) Folgendes aufweist:
eine Eingangsseite (50);
eine Unterseite (52) gegenüber der Eingangsseite (50);
eine Drosselung (86) zwischen der Eingangsseite (50) und der Unterseite (52);
einen einspringenden Abschnitt (60) an der Seite der Drosselung (86), die der Unterseite (52) gegenüberliegt; und
eine ringförmige Seitenoberfläche (54), die sich zwischen der Eingangsseite (50) und der Drosselung (86) erstreckt,
**dadurch gekennzeichnet, dass**
die ringförmige Seitenoberfläche (54) mindestens teilweise einen Raum (82) definiert, der sich in der Richtung der Drosselung (86) aufweitet.

16. Verbrennungsmotor nach Anspruch 15, wobei die Kolbenmulde (44) ferner einen erhöhten Abschnitt (64) an der Unterseite (52) aufweist.

17. Verbrennungsmotor nach Anspruch 16, wobei der einspringende Abschnitt (60) einen hinterschnittenen Bereich (84) aufweist, der zwischen einer Tangente (T3) zu der ringförmigen Seitenoberfläche (54) und einer Wand (58) des einspringenden Abschnitts (60) angeordnet ist.

18. Verbrennungsmotor nach Anspruch 17, wobei sich die Tangente (T3) zu der ringförmigen Seitenoberfläche (54) und die Wand (58) des einspringenden Abschnitts (60) an einer Kante (62) schneiden, die einen Radius (R2) von zwischen etwa 0 und 2 mm, vorzugsweise zwischen etwa 0,01 und 1 mm und mehr bevorzugt etwa 0,5 mm aufweist.

19. Motor nach einem der Ansprüche 15 bis 18, wobei die Fläche (42) eine Lippe (56) mit einem Radius (R1) zwischen etwa 0 und 2 mm, vorzugsweise zwischen etwa 0,2 und 1 mm, mehr bevorzugt etwa 0,5 mm aufweist.

20. Motor nach einem der Ansprüche 15 bis 20, wobei sich der erhöhte Abschnitt (64) in den Raum (82) erstreckt, der mindestens teilweise durch die ringförmige Seitenwand (54) definiert ist.

## Revendications

1. Couronne de piston comprenant :
une face (42) ; et
une cuvette de piston (44) évidée dans la face (42) et ayant :
un côté d'entrée (50) ;
un côté de fond (52) opposé au côté d'entrée (50) ;
une restriction (86) entre le côté d'entrée (50) et le côté de fond (52) ;
une partie rentrante (60) sur le côté de fond (52) ; et
une surface latérale annulaire (54) s'étendant entre le côté d'entrée (50) et la restriction (86), **caractérisée en ce que** :
la surface latérale annulaire (54) définit au moins en partie un espace (82) s'élargissant dans la direction de la restriction (86).

2. Couronne de piston selon la revendication 1, dans laquelle une partie relevée (64) est disposée sur le côté de fond (52).

3. couronne de piston selon la revendication 1, dans laquelle la surface latérale annulaire (54) est raccordée à une paroi de fond (58) de la partie rentrante (60) par un bord au moins en partie arrondi (62) ayant un rayon (R2) entre environ 0 et 2 mm, de préférence entre environ 0,01 et 1 mm, mieux encore d'environ 0,5 mm.

4. Couronne de piston selon l'une quelconque des revendications 1 à 3, dans laquelle la cuvette (44) comprend une lèvre (56) sur la face (42), la lèvre (56) étant arrondie et ayant un rayon (R1) entre environ 0 et 2 mm, de préférence entre environ 0,2 et 1 mm, mieux encore d'environ 0,5 mm.

5. Couronne de piston selon l'une quelconque des revendications 1 à 4, dans laquelle l'espace au moins partiellement défini par la surface latérale annulaire (54) forme une gorge (82).

6. Couronne de piston selon la revendication 2, dans laquelle la partie relevée (64) s'étend dans l'espace (82) défini au moins en partie par la surface latérale annulaire (54).

7. Couronne de piston selon la revendication 6, dans laquelle la partie relevée (64) s'étend entre environ 4 et 15 mm en dessous de la face (42), de préférence entre environ 4 et 12 mm, mieux encore d'environ 5 mm.

8. Couronne de piston selon l'une quelconque des revendications 1 à 6, comprenant une partie relevée (64) sur le côté de fond (52), dans laquelle la partie relevée (64) comprend une base (66) ayant une forme sensiblement tronconique et un sommet (68) ayant une forme sensiblement conique, une surface externe (72) du sommet (68) étant raccordée à une surface externe (74) de la base (66) par un rayon (R3) entre environ 5 et 10 mm, de préférence d'environ 7,5 mm.

9. Couronne de piston selon la revendication 8, dans laquelle une tangente (T1) de la base (66) fait un angle (α) entre environ 0 et 30 degrés avec un axe longitudinal (46) du sommet (68) et une tangente (T2) du sommet (68) fait un angle (β) entre environ 45 et 75 degrés avec l'axe longitudinal (46).

10. Couronne de piston selon l'une quelconque des revendications 1 à 8, dans laquelle la couronne de piston (28) a un axe de cuvette (46) et la cuvette (44) est symétrique en rotation autour d'un axe de cuvette (46) qui est décalé de l'axe central (34), de préférence parallèle à l'axe central (34).

11. Couronne de piston selon l'une quelconque des revendications 1 à 10, dans laquelle une tangente (T3) de la surface latérale annulaire (54) fait un angle (γ) entre environ 10 et 40 degrés, de préférence entre environ 20 et 35 et, mieux encore, d'environ 19,2 degrés avec un axe central (46) de la couronne.

12. Piston comprenant une couronne de piston (28) selon l'une quelconque des revendications 1 à 11.

13. Procédé de mélange de carburant et d'air, comprenant les étapes consistant à :
diriger de l'air et du carburant pour les faire pénétrer dans une cuvette (44) et les dilater radialement vers l'extérieur ;
restreindre l'air et le carburant après qu'ils sont entrés dans la cuvette (44) et qu'ils ont été dilatés radialement ;
mélanger l'air et le carburant dans la cuvette (44) pour former un mélange ;
rediriger au moins une partie du mélange pour qu'elle coupe l'air et le carburant s'étendant radialement vers l'extérieur et
dilater l'air et le carburant radialement vers l'extérieur une deuxième fois.

14. Procédé selon la revendication 13, comprenant en outre les étapes consistant à :
rediriger une partie du mélange vers une zone de restriction (86) ;
couper la partie redirigée du mélange avec de l'air et/ou du carburant sur un côté d'entrée (50) de la cuvette (44) ; et
réintroduire une partie du mélange à travers la zone de restriction (86).

15. Moteur à combustion comprenant :
au moins un cylindre (26) ;
une tête de cylindre (16) associée au au moins un cylindre (26) pour former une chambre de combustion (88) ;
un dispositif d'injection de carburant (106) disposé dans la tête de cylindre (16) pour pulvériser du carburant dans la chambre de combustion (88) ; et
un piston disposé dans le au moins un cylindre (26) pour recevoir le carburant pulvérisé, le piston ayant :
une face (42) ; et
une cuvette de piston (44) évidée dans la face (42), la cuvette de piston (44) ayant :
un côté d'entrée (50) ;
un côté de fond (52) opposé au côté d'entrée (50) ;
une restriction (86) entre le côté d'entrée (50) et le côté de fond (52) ;
une partie rentrante (60) sur le côté de la restriction (86) en regard du côté de fond (52) ; et
une surface latérale annulaire (54) s'étendant entre le côté d'entrée (50) et la restriction (86), **caractérisé en ce que** :
la surface latérale annulaire (54) définit au moins en partie un espace (82) s'élargissant dans la direction de la restriction (86).

16. Moteur à combustion selon la revendication 15, dans lequel la cuvette de piston (44) comprend en outre une partie relevée (64) sur le côté de fond (52).

17. Moteur à combustion selon la revendication 16, dans lequel la partie rentrante (60) comprend une zone affouillée (84) positionnée entre une tangente (T3) à la surface latérale annulaire (54) et une paroi (58) de la partie rentrante (60).

18. Moteur à combustion selon la revendication 17, dans lequel la tangente (T3) à la surface latérale annulaire (54) et la paroi (58) de la partie rentrante (60) se coupent sur un bord (62) qui a un rayon (R2) entre environ 0 et 2 mm, de préférence entre environ 0,01 et 1 mm, mieux encore d'environ 0,5 mm.

19. Moteur selon l'une quelconque des revendications 15 à 18, dans lequel la face (42) a une lèvre (56) avec un rayon (R1) entre environ 0 et 2 mm, de préférence entre environ 0,2 et 1 mm, mieux encore d'environ 0,5 mm.

20. Moteur selon l'une quelconque des revendications 15 à 20, dans lequel la partie relevée (64) s'étend dans l'espace (82) au moins en partie défini par la paroi latérale annulaire (54).
